(19) Europäisches Patentamt
European Patent Office
Office européen des brevets

(11) **EP 1 347 158 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(51) Int Cl.⁷: **F02B 37/14**, F02B 37/16

(21) Anmeldenummer: 02100275.3

(22) Anmeldetag: **19.03.2002**

(54) **Unterstützendes elektrisches Ladesystem für eine Brennkraftmaschine und Verfahren zu dessen Regelung**

Electrically assisted charger system for an internal combustion engine and method for the regulation

Système de charge avec assistance électrique pour un moteur à combustion interne et methode pour la régulation

(84) Benannte Vertragsstaaten:
**DE FR GB**

(43) Veröffentlichungstag der Anmeldung:
**24.09.2003 Patentblatt 2003/39**

(73) Patentinhaber: **Ford Global Technologies, LLC Dearborn, MI 48126 (US)**

(72) Erfinder: **Paffrath, Holger 50259, Pulheim (DE)**

(74) Vertreter: **Drömer, Hans-Carsten et al Ford-Werke Aktiengesellschaft, Patentabteilung NH/DRP, Henry-Ford-Strasse 1 50725 Köln (DE)**

(56) Entgegenhaltungen:
**US-A- 5 906 098**   **US-A- 6 062 026**
**US-B1- 6 205 787**

• **PATENT ABSTRACTS OF JAPAN vol. 007, no. 071 (M-202), 24. März 1983 (1983-03-24) & JP 57 212331 A (HITACHI SEISAKUSHO KK), 27. Dezember 1982 (1982-12-27)**

**Beschreibung**

Die Erfindung betrifft ein Verfahren zur Regelung eines unterstützenden elektrischen Ladesystems (electric assisted boosting devices, EABD) für eine Brennkraftmaschine. Ferner betrifft die Erfindung ein zur Ausführung eines derartigen Verfahrens eingerichtetes unterstützendes elektrisches Ladesystem.

Zur Leistungssteigerung von Brennkraftmaschinen werden Ladesysteme (booster) eingesetzt, welche durch eine Druckerhöhung im Ansaugsystem der Brennkraftmaschine für eine erhöhte Füllung der Zylinder mit Ladeluft sorgen. Häufig werden dabei sogenannte Abgasturbolader verwendet, deren Antrieb durch die aus dem Motor ausströmenden Abgase erfolgt. Nachteilig hieran ist jedoch, daß diese nur verzögert auf eine plötzliche erhöhte Leistungsanforderung an den Motor reagieren können, da sich zunächst der Abgasstrom aus dem Motor erhöhen muß, bevor der Druckaufbau durch den Abgasturbolader steigen kann.

Zur Steigerung der Dynamik bei der Aufladung einer Brennkraftmaschine ist es daher bekannt, unterstützende elektrisch betriebene Ladesysteme einzusetzen, welche durch eine steuerbare Zufuhr elektrischer Energie quasi verzögerungslos aktiviert werden können. Ein derartiges unterstützendes Ladesystem ist beispielsweise aus der DE 197 08 721 A1 bekannt. Bei diesem bekannten Ladesystem ist ein elektrisch betriebener Kompressor im Ansaugsystem der Brennkraftmaschine vor einem Abgasturbolader angeordnet. Die Ansteuerung des EDC erfolgt in nicht näher spezifizierter Weise in Abhängigkeit von der Stellung eines Fahrpedals sowie des Ladedrucks und/oder der Motordrehzahl. Ferner wird der Elektromotor des EDC abgeschaltet, sobald ein vorbestimmter Ladedruck erreicht wird.

Aus der US 6 205 787 B1 sind verschiedene Konfigurationen von Brennkraftmaschinen mit einem kleinen elektrisch betriebenen Kompressor bekannt, welcher parallel zu einer Bypassleitung mit einem darin angeordneten Rückschlagventil angeordnet ist. Der Kompressor kann bei einer Beschleunigung ausgehend von geringen Motordrehzahlen und/oder in einem Dauerbetrieb mit geringer Drehzahl eingesetzt werden. Als Signaleingänge für die Kompressorregelung werden ferner der Ansaugdruck, die Motordrehzahl, die angeforderte Beschleunigung sowie die Motorlast genannt.

Die US 6 062 026 beschreibt den Einsatz eines elektrisch betriebenen Kompressors, gegebenenfalls ergänzt um einen elektrisch unterstützten Turbolader. Ferner wird ein aufwändiges Verfahren beschrieben zur Kombination des unterstützenden Ladesystems mit einer Abgasrückführung. Das unterstützende Ladesystem wird in Abhängigkeit von Signalen der Motordrehzahl, Drosselklappenposition, Beschleunigungsanforderung und Motorlast in Betrieb genommen. Des Weiteren wird erwähnt, dass das unterstützende Ladesystem optional von einer Bypassleitung mit einem Bypassventil umgangen werden kann, wenn es nicht im Einsatz ist.

Die US 5 906 098 betrifft die Konstruktion eines elektrisch unterstützten Turboladers. Dieser wird bei geringen Motordrehzahlen mit kleiner Energieversorgung betrieben, und die Energieversorgung wird kurzzeitig erhöht, wenn die Drehzahl der Brennkraftmaschine beschleunigt werden soll.

Nachteilig bei unterstützenden elektrischen Ladesystemen ist ihr Verbrauch an elektrischer Energie. So stellt ihr Betrieb eine zusätzliche Last für die Lichtmaschine dar und erfordert häufig eine größere Batterie, um Leistungsspitzen abfangen zu können.

Vor diesem Hintergrund war es Aufgabe der vorliegenden Erfindung, ein Verfahren zur Regelung eines Ladesystems für eine Brennkraftmaschine, daß einen Abgasturbolader und einen elektrischen betriebenen Kompressor umfaßt, bereitzustellen, durch welches die gewünschten Verbesserungen der Fahreigenschaften erreicht werden und gleichzeitig der Verbrauch an elektrischer Energie minimiert wird.

Diese Aufgabe wird durch ein Verfahren mit den Merkmalen des Anspruchs 1 sowie durch ein Ladesystem mit den Merkmalen des Anspruchs 10 gelöst.

Vorteilhafte Ausgestaltungen sind in den Unteransprüchen enthalten.

Das erfindungsgemäße Verfahren zur Regelung eines Ladesystems für eine Brennkraftmaschine, daß einen Abgasturbolader und einen elektrischen betriebenen Kompressor umfaßt, basiert auf den folgenden beiden Regelungsschritten:

a) Das Ladesystem wird mit hoher Leistung betrieben, wenn der angeforderte Kraftstofffluß zur Brennkraftmaschine einen (vorzugsweise von der Motordrehzahl und dem Ladedruck abhängigen) Kraftstofffluß-Grenzwert überschreitet. Der angeforderte Kraftstofffluß spiegelt unter anderem die vom Fahrer gewünschte Motorleistung wider. Eine "hohe Leistung" für den Betrieb des Ladesystems kann insbesondere die maximal mögliche Leistung des Ladesystems sein, welche in der Regel durch die Batteriespannung oder die Temperatur des Reglers begrenzt wird. Die Abhängigkeit zwischen dem Kraftstofffluß-Grenzwert, der Motordrehzahl und dem Ladedruck kann in einer empirisch oder durch theoretische Überlegungen gewonnenem Kennfeld abgespeichert und zur Verfügung gestellt werden.

b) Das Ladesystem wird auf einen Leerlaufbetrieb zurückgestellt, wenn ein (vor zugsweise von der Motordrehzahl und dem angeforderten Kraftstofffluß abhängiger) Ziel-Ladedruck erreicht ist. Auch hier kann der Ziel-Ladedruck in seiner Abhängigkeit von der Motordrehzahl und dem angeforderten Kraftstofffluß in einer empirisch oder theoretisch gewonnenen Karte abgespeichert werden.

c) Die Leistungszufuhr zum Ladesystem wird reduziert oder unterbrochen wenn die Drehzahl des Ladesystems einen Maximalwert überschreitet.

Das beschriebene Verfahren führt zu einem guten Fahrverhalten bei gleichzeitig minimiertem Verbrauch elektrischer Leistung. Das Ladesystem wird nur so oft wie tatsächlich nötig in Betrieb genommen, wobei es dann jedoch durch die Zufuhr hoher beziehungsweise maximaler Leistung einen schnellstmöglichen Druckaufbau garantiert. Die Regelung ist dabei flexibel und nicht auf feste Grenzwerte etwa der Motordrehzahl fixiert. Sie kann daher zum Beispiel auch auf einen erhöhten Druckabfall im Lufteinlaßsystem oder auf einen Betrieb der Brennkraftmaschine in großen Höhen über dem Meeresspiegel geeignet reagieren. Ferner ist zu beachten, daß das Ladesystem einen Leerlaufbetrieb aufweist, welcher mehr als ein bloßes Abschalten sein kann und der die Verfügbarkeit des Systems erhöht. Vorteilhaft ist hierbei auch, daß das Zurückschalten auf den Leerlaufbetrieb erst bei Erreichen des Ziel-Ladedrucks erfolgt und nicht schon dann, wenn der angeforderte Kraftstofffluß wieder unter den in Schritt a) genannten Kraftstofffluß-Grenzwert gefallen ist. Letzteres könnte nämlich zu einem mehrfach wiederholten Anschalten des Ladesystems unter maximaler Leistung mit nur kurzen zwischenliegenden Auszeitperioden führen, was eine erhöhte Geräusch- und Vibrationsbelastung zur Folge hätte. Unter Inkaufnahme eines geringfügig erhöhten Verbrauches an elektrischer Energie können derartige Nachteile vermieden und gleichzeitig schnelle Anstiege des Ladedruckes erreicht werden.

Durch das Beachten einer maximalen Drehzahl des Ladesystems kann dieses vor einer mechanischen Überbeanspruchung geschützt werden.

Die zwischen den Schritten a) und b) stattfindenden Änderungen der Leistungszufuhr zum Ladesystem werden vorzugsweise rampenförmig ausgeführt, d.h. mit einem stetigen Übergang zwischen den vorgegebenen Werten. Typischerweise liegt dabei die Dauer eines Übergangs zwischen ca. ein bis drei Sekunden. Plötzliche Änderungen im Massenfluß durch die Brennkraftmaschine, die zum Beispiel ein Pumpen des Abgasturboladers verursachen könnten, werden hierdurch vermieden.

Gemäß einer Weiterbildung des Verfahrens wird die Leistungszufuhr zum Ladesystem reduziert oder unterbrochen, wenn die Versorgungsspannung des Ladesystems einen Minimalwert unterschreitet und/ oder wenn an der Brennkraftmaschine eine Abgasrückführung durchgeführt wird. Die Batterie wird vor einer übermäßigen Entleerung geschützt, wenn das Ladesystem bei Unterschreiten einer minimalen Batteriespannung ausgeschaltet wird. Schließlich kann die Aktivität des Ladesystems reduziert oder beendet werden, wenn eine Abgasrückführung stattfindet, um auf diese Weise unerwünschte und nicht beherrschbare Wechselwirkungen verschiedener Regelungsalgorithmen der Brennkraftmaschine zu verhindern.

In der Regel gibt es bei einer aufgeladenen Brennkraftmaschine mehrere Möglichkeiten, den Ladedruck zu regeln. Eine Möglichkeit hiervon regelt den Ladedruck über den wirksamen Turbinenquerschnitt einer Turbine mit variabler Düse (VNT: Variable Nozzle Turbine). Um unerwünschte Wechselwirkungen zwischen der Leistungsregelung des unterstützenden elektrischen Ladesystems und solchen anderen Möglichkeiten zur Veränderung des Ladedrucks auszuschließen, werden Letztere vorzugsweise im offenen Regelkreis betrieben, wenn die Leistungszufuhr zum unterstützenden elektrischen Ladesystem oberhalb einer gewissen Schwelle liegt. Diese Schwelle hängt von der jeweiligen Anwendung ab. Alternativ könnte auch das unterstützende elektrische Ladesystem gemäß dem Leerlaufbetrieb im offenen Regelkreis betrieben werden, während die andere Möglichkeit zur Regelung des Ladedrucks, zum Beispiel die Regelung der VNT, im geschlossenen Regelkreis betrieben wird.

Bei dem unterstützenden elektrischen Ladesystem kann es sich insbesondere um ein elektrisches Unterstützungssystem für einen Abgasturbolader (EAT: Electric Assisted Turbocharger) handeln. Dieses besteht in der Regel aus einem Elektromotor, welcher auf der Welle des Turboladers angeordnet ist und diese zusätzlich antreiben kann, um die Beschleunigungszeiten des Turboladers zu verkürzen beziehungsweise die Leistung des Kompressors im stationären Betrieb zu erhöhen. Vorteilhaft bei einem derartigen System ist, daß die Welle des Elektromotors ständig rotiert, solange die Brennkraftmaschine läuft. Hierfür ist keine Zufuhr elektrischer Leistung erforderlich, da dieser Grundantrieb durch die Turbine des Abgasturboladers erfolgt. Die somit bestehende anfängliche Drehzahl der Welle verbessert die transiente Antwort des Systems erheblich, da der Elektromotor mit höherer effektiver Leistung betrieben werden kann. Die effektive Leistung ändert sich während einer Beschleunigung bei maximaler Leistungsanforderung vom EAT. Bei geringen Drehzahlen der Welle ist die effektive Leistung des Elektromotors durch das maximale Drehmoment des Motors begrenzt. Mit steigender Drehzahl der Welle steigt auch die effektive Leistung des Elektromotors, bis diese die maximale Leistung erreicht. Anschließend arbeitet der Elektromotor mit konstanter maximaler Leistung weiter. Bei sehr hohen Drehzahlen der Welle kann der Elektromotor nicht mehr unterstützend wirken und wird daher abgeschaltet, während die Turbine die Beschleunigung der Welle fortsetzt. In vielen Fällen liegt die Wellendrehzahl im Grundzustand bereits ausreichend hoch, so daß der EAT von Beginn an mit maximaler effektiver Leistung wirken kann.

Gemäß einer alternativen Ausgestaltung des Verfahrens wird das Ladesystem durch einen elektrisch betriebenen Kompressor (im Folgenden EDC - "Electric Driven Compressor" - abgekürzt) gebildet. Der EDC weist einen Elektromotor auf, welcher einen Verdichter betreibt. Ein EDC wird in Reihe mit einem Turbolader stromaufwärts oder stromabwärts des Turboladers eingesetzt. Typisch für einen EDC ist, dass die Welle des Elektromotors ohne einen aktiven Antrieb sich nur mit sehr geringer Drehzahl dreht, da die durch den Verdichter fließende Luft aufgrund aerodynamischer Kräfte eine leichte Mitdrehung verursacht. Durch die geringe Drehzahl ist bei einer plötzlichen Leistungsanforderung vom EDC dessen effektive Leistung aufgrund von Drehmomentbegrenzungen sehr viel geringer als angefordert. Die vom EDC bewirkte Beschleunigung des Druckanstiegs ist daher gering.

Angesichts der vorstehend genannten Besonderheiten eines EDC wird dieser gemäß einer Weiterbildung des Verfahrens im Leerlaufbetrieb so betrieben, dass - wenn möglich -

    a) die zugeführte Leistung oberhalb eines Minimalwertes bleibt, und/oder

    b) seine Drehzahl konstant bleibt, und/oder

    c) der Druckabfall über den EDC auf bzw. über einem vorgegebenen Druckabfallwert bleibt, und/oder

    d) die zugeführte Leistung einen von der Motordrehzahl und dem angeforderten Kraftstofffluß vorgegebenen Wert aufweist.

Wie die genannten Vorschriften zeigen, ist ein Leerlaufbetrieb des Ladesystems nicht gleichbedeutend mit einem Leerlauf der Brennkraftmaschine. Ersterer bedeutet vielmehr einen Betrieb des Ladesystems bei einem beliebigem Zustand der Brennkraftmaschine ohne eine Überschreitung des Kraftstofffluß-Grenzwertes durch den angeforderten Kraftstofffluß und damit ohne Anforderung einer maximalen Leistung vom Ladesystem. In einem derartigen Leerlaufbetrieb kann die einem EDC zugeführte elektrische Leistung nach den genannten Kriterien bestimmt werden. Dabei stellt die Beachtung eines Minimalwertes der Leistung gemäß Alternative a) sicher, daß sich der EDC ständig mit einer (vom Luftmassenfluß durch den Verdichter und dem Druckverhältnis abhängigen) Leerlaufdrehzahl dreht, so daß eine schnellere Antwort auf eine plötzliche Leistungsanforderung möglich ist. Der Minimalwert der zugeführten Leistung kann je nach Anwendung variieren und zum Beispiel 25 W betragen. Eine Verbesserung des Antwortverhaltens des EDC kann gemäß den Alternativen b) und c) dadurch erhalten werden, daß die zugeführte Leistung im Leerlaufbetrieb im offenen oder geschlossenen Regelkreis so eingestellt wird, daß der EDC mit einer konstanten Drehzahl oder einem konstanten Druckabfall über den Verdichter betrieben wird. Letzteres setzt in der Regel voraus, daß eine eventuell vorhandene Bypass-Klappe (siehe unten) geschlossen ist. Bei der Alternative d) wird eine Kennlinie bzw. ein Kennfeld bereitgestellt, in welchem bzw. welcher die zuzuführende Leistung im Leerlaufbetrieb in Abhängigkeit von der Motordrehzahl und dem angeforderten Kraftstofffluß verzeichnet ist. Dieser Tabellenspeicher bzw. diese Karte kann empirisch oder aufgrund theoretischer Überlegungen gewonnen werden.

Vorzugsweise werden mindestens zwei der vorstehend genannten Alternativen a) bis d) für die Festlegung der zuzuführenden Leistung im Leerlaufbetrieb parallel derart eingesetzt, daß zu jedem Zeitpunkt das Maximum der von den verschiedenen Alternativen berechneten Leistungen dem EDC tatsächlich zugeführt wird.

Gemäß einer Weiterbildung des mit einem EDC arbeitenden Verfahrens ist eine Bypass-Leitung zur Umgehung des EDC vorhanden, welche von einer Bypass-Klappe wahlweise (ganz oder zum Teil) geöffnet und verschlossen werden kann. Die Bypass-Leitung hat den Vorteil, daß bei Bedarf der Luftfluß unter Umgehung des EDC gesteuert werden kann. Dies ist insbesondere dann sinnvoll, wenn der EDC nicht aktiv ist und somit nur als Strömungswiderstand gegenüber dem Luftmassenstrom wirkt. Eine solche Hinderniswirkung kann dann durch das Öffnen der Bypass-Klappe weitgehend beseitigt werden.

Für die Kontrolle des Öffnens und Schließens der Bypass-Klappe bestehen verschiedene Möglichkeiten. Gemäß einer ersten Ausführungsform ist die Bypass-Klappe derart selbstbetätigend, daß diese bei einem aktiven Betrieb des EDC schließt und hierdurch den Luftmassenstrom komplett über den EDC lenkt. Eine solche, ähnlich einem Rückschlagventil arbeitende Bypass-Klappe ist konstruktiv und vom erforderlichen Regelungsaufwand her sehr einfach und kostengünstig zu realisieren.

Ein differenzierterer Einsatz der Bypass-Leitung ist indes möglich, wenn die Bypass-Klappe aktiv angesteuert wird. Dabei kann diese insbesondere in Abhängigkeit von der Leistungszufuhr zum EDC betätigt werden, wobei sie geschlossen wird, wenn die Leistungszufuhr eine bestimmte Schwelle überschreitet. Unterhalb der genannten Schwelle wird die Klappe dagegen geöffnet. Bei dieser Regelungsstrategie ist die Bypass-Klappe somit geöffnet, bis eine Anforderung höherer Druckerzeugung durch den EDC vorliegt. Bevor dieser höhere Druck vom EDC erzeugt werden kann, muß die Bypass-Klappe zunächst geschlossen werden, da andernfalls ein Rückfluß der Luft über die geöffnete Bypass-Leitung stattfindet. Diese Notwendigkeit eines vorherigen Schließens der Bypass-Klappe kann zu einer gewissen Verzögerung in der Antwort des Ladesystems führen.

Zur Vermeidung einer derartigen Verzögerung kann die Steuerung der Bypass-Klappe so erfolgen, daß diese geschlossen wird, wenn die Motordrehzahl unter einen vorgegebenen Minimalwert sinkt. D.h., daß die Bypass-Klappe in einem unteren Drehzahlbereich der Brennkraftmaschine geschlossen bleibt, wobei der Minimalwert der Drehzahl von der jeweiligen Anwendung und den Randbedingungen abhängt und zum Beispiel 2000 U/min betragen kann. Oberhalb dieses Minimalwertes wird die Bypass-Klappe dagegen mit dem "normalen" Regelungsalgorithmus betätigt. Da der Einsatz des EDC gerade im unteren Drehzahlbereich der Brennkraftmaschine am wahrscheinlichsten ist, wird eine Reaktionsverzögerung durch das ständige Geschlossenhalten der Bypass-Klappe in diesem Bereich in vielen Situationen vermieden. Dabei muß allerdings auf eine sorgfältige Festlegung des Minimalwertes der Motordrehzahl geachtet werden, da ansonsten unnötige Druckverluste durch eine geschlossene Bypass-Leitung verursacht werden.

Zur Minimierung unnötiger Druckverluste kann gemäß einer Weiterbildung des Verfahrens das Öffnen der Bypass-Klappe derart geregelt werden, daß ein vorgegebener maximaler Druckabfall über das Ladesystem hinweg aufrecht erhalten wird. Dieses Vorgehen erfordert, daß über einen geeigneten Sensor - wie etwa einen Differenzdrucksensor - der Druckabfall über die Bypass-Leitung beziehungsweise den Verdichter des EDC gemessen wird. Unter Ausnutzung der so gewonnenen Meßwerte kann dann die Position der Bypass-Klappe so geregelt werden, daß ein vorgegebener Ziel-Druckabfall erreicht bzw. nicht überschritten wird. Die Größe dieses Ziel-Druckabfalls hängt von der jeweiligen Anwendung und den Rahmenbedingungen ab und wird in der Regel ein verhältnismäßig kleiner Wert wie typischerweise 5 mbar sein. Ein derartiger geringer Ziel-Druckabfall führt zu einem Schließen der Bypass-Klappe, wenn der Massenfluß durch die Brennkraftmaschine verhältnismäßig klein ist. Die durch ein notwendiges Schließen der Bypass-Klappe auftretende Zeitverzögerung in der Reaktion des EDC ist daher für die meisten in der Praxis auftretenden Fälle gering. Falls ferner der Luftmassenfluß und damit der Druckverlust ansteigt, öffnet der Regler die Bypass-Klappe und hält hierdurch den Druckverlust gering.

Die oben beschriebenen Regelungsverfahren für das Öffnen und Schließen einer Bypass-Klappe können vorteilhaft mit den Regelungsverfahren für die Leistungszufuhr zum EDC kombiniert werden. So kann der EDC derart betrieben werden, daß ein minimaler Druckabfall von beispielsweise 1 mbar an der Bypass-Klappe aufrecht erhalten wird.

Wenn die Brennkraftmaschine bei sehr geringer Drehzahl und Last läuft, kann ein Druckabfall von 1 mbar mit hoher Wahrscheinlichkeit mit sehr geringer Leerlaufleistung des EDC und daher sehr geringer EDC-Drehzahl erreicht werden. Um dennoch auf eine plötzliche Druckanforderung vorbereitet zu sein, sollte die EDC-Drehzahl höher sein. Die auf eine Überwachung der EDC-Drehzahl gerichtete Alternative b) der vorstehend genannten EDC-Regelung gibt daher einen größeren Wert für die EDC-Leerlaufleistung vor als die auf eine Überwachung des Druckabfalls gerichtete Alternative c). Gemäß der vorstehend erläuterten Maximum-Auswahlregel sollte daher der größere dieser beiden Werte der Leerlaufleistung ausgewählt werden, um die Einhaltung einer Minimaldrehzahl des EDC zu garantieren.

Wenn unter Fortsetzung des geschilderten Szenarios bei einem bestimmten höheren Luftmassenfluß die von der Druckabfall-Regelung geforderte EDC-Leistung höher ist als diejenige von der Drehzahlregelung (Alternative b), wird wiederum der höhere Wert gewählt, um den minimalen Druckabfall zu gewährleisten. Wenn dabei die Regelung der Bypass-Klappe derart eingestellt ist, daß diese einen maximalen Ziel-Druckabfall von beispielsweise 5 mbar einzuhalten versucht, wird die Bypass-Klappe in diesem Fall geschlossen sein. Bei weiter ansteigendem Luftmassenfluß durch die Brennkraftmaschine muß der EDC mit zunehmender Leistung arbeiten, um den minimalen Druckabfall von 1 mbar an der Bypass-Klappe aufrecht zu erhalten. Dabei werden bevorzugt Leistungsgrenzen gesetzt, um einen übermäßigen Verbrauch elektrischer Energie zu verhindern. Sobald die Leerlaufkontrolle des EDC den vorgegebenen minimalen Druckabfall nicht mehr unter Einhaltung der Leistungsgrenzen aufrecht erhalten kann, nimmt der Druckabfall an der Bypass-Klappe zu. Wenn dieser dabei den Ziel-Druckabfall der Bypass-Klappenregelung erreicht und der Luftmassenfluß weiter zunimmt, beginnt die Bypass-Klappe sich zu öffnen. Gemäß einer bevorzugten Ausgestaltung des erfindungsgemäßen Verfahrens wird nun der für die Regelung der Leistung des Ladesystems vorgegebene Druckabfallwert (Alternative c) auf Null gesetzt, sobald die Bypass-Klappe nicht geschlossen ist (diese also ganz oder teilweise geöffnet ist). Bei einer geöffneten Bypass-Klappe ist nämlich ein weiterer Betrieb des EDC zur Gewährleistung eines minimalen Druckabfalls nicht mehr sinnvoll, so daß die Regelungsalternative c) faktisch ausgeschaltet wird.

Vorzugsweise werden die Parameter der vorstehend erläuterten Regelungsverfahren für die Leistung des Ladesystems beziehungsweise für die Öffnung der Bypass-Klappe wahlweise gemäß eines eher sportlichen oder gemäß eines eher ökonomischen Modus vorgegeben. Bei den beschriebenen Möglichkeiten, eine bestimmte Ziel-Drehzahl des EDC, einen Ziel-Druckabfall des EDC und einen Ziel-Druckabfall der Bypass-Klappe im Leerlaufbetrieb vorzugeben, kann nämlich die Bypass-Klappe zu Beginn eines Beschleunigungsvorganges in einer ganz oder teilweise geöffneten Position sein, wobei dieser Fall von den gesetzten Parametern der Regelverfahren abhängt. Insbesondere hängt die Bypass-Klappenposition von der Leerlaufleistung des EDC ab. Je höher die Leerlaufleistung des EDC ist, um so höher ist die Grenze des Massenflusses, bei welchem die Bypass-Klappe zu öffnen beginnt. In Hinblick auf ein schnelles Reaktionsverhalten ist ein späteres Öffnen zwar günstig, jedoch leidet die Kraftstoffausnutzung unter einer hohen Leerlaufleistung des EDC. Aus diesem Grunde ist es vorteilhaft, die vorgeschlagene Wahlmöglichkeit zwischen verschiedenen Parametersätzen entsprechend einem sportlichen beziehungsweise ökonomischen Modus zu gewähren, wobei zu den Parametersätzen insbesondere der Ziel-Druckabfall für die Bypass-Klappe, die Ziel-Leerlaufdrehzahl des EDC, die Ziel-Leerlaufleistung des EDC und/oder der Ziel-Druckabfallwert des EDC gehören. In einem sportlichen Modus werden dabei die Drehzahl, die Leistung oder der Druckabfall des EDC für den Leerlauf sowie der Ziel-Druckabfall der Bypass-Klappe verhältnismäßig hoch gewählt. Die Startbedingungen des EDC sind daher im Falle einer plötzlichen Beschleunigung sehr gut, was jedoch zu Lasten der Kraftstoffausnutzung geht. Dagegen sind im ökonomischen Fahrmodus die Leerlaufleistung und der Ziel-Druckabfall eher niedrig. Dies kann in einigen Fällen zu einer verzögerten Reaktion führen, hat jedoch gleichzeitig nur geringe oder gar keine Nachteile hinsichtlich der Kraftstoffausnutzung durch den EDC. Der anzuwendende Fahrmodus kann auf der Basis des beobachteten Fahrverhaltens oder basierend auf Schalterstellungen ermittelt werden. Für Automatikgetriebe können ökonomische oder sportliche Fahrmodi üblicherweise ausgewählt werden. Eine solche Auswahl kann für den EDC in der gleichen oder in ähnlicher Weise erfolgen.

Die von einem unterstützenden elektrischen Ladesystem erbringbare Leistung wird durch verschiedene Parameter begrenzt. Die Spitzenleistung ist insbesondere durch konstruktive Vorgaben wie zum Beispiel Kabeldurchmesser oder durch die Batteriespannung begrenzt. Für eine gegebene Auslegung ist die maximale Leistung im Dauerbetrieb hauptsächlich durch thermische Effekte und die Batteriekapazität begrenzt. Während dabei die Batteriekapazität ein Begrenzungsfaktor nach beispielsweise 1 min des Betriebes sein kann, können die thermischen Faktoren bereits nach wenigen Sekunden begrenzend wirken. Typischerweise ist die maximale Dauerleistung geringer als die maximale Spitzenleistung. Die Leistung während eines Dauerbetriebs muß daher reduziert werden, um die Temperatur der elektrischen Bauteile unter einem bestimmten Grenzwert zu halten. Das Niveau der Dauerleistung hängt dabei von der Wärmeabstrahlung und der Kühlung ab. Um die maximale Dauerleistung so hoch wie möglich zu halten, kann die Temperatur des Elektromotors des Ladesystems und der Steuerungseinheit des Ladesystems gemessen werden. Mit Hilfe dieser Meßwerte kann die Leistungszufuhr zum Ladesystem derart begrenzt werden, daß keine Überhitzung des Energieversorgungssystems eintritt. Um die Gefahr einer Überhitzung auch ohne die Notwendigkeit einer Temperaturmessung und eines entsprechenden Temperatursensors zu erkennen, kann alternativ ein Software-Algorithmus verwendet werden. Der Algorithmus basiert dabei auf der Annahme, daß das Ladesystem mit einer bestimmten Leistung auf Dauer betrieben werden kann, ohne irgendein Bauteil zu überhitzen. Diese maximale Dauerleistung hängt von der jeweiligen Anwendung ab. Zur Bestimmung der Leistungsgrenze des Ladesystems wird dabei das Integral der effektiven Ladesystem-Leistung minus der maximalen Dauerleistung verwendet, wobei ein konstanter Faktor k zur Anpassung des Algorithmus an eine gegebene Anwendung verwendet werden kann:

$$I = \int k \cdot \Delta pow,$$

mit

$\Delta pow$ = eff. Leistung - maximale Dauerleistung
$\Delta pow$ = 0 falls I = 0 und eff. Leistung < max. Dauerleistung

Die Beziehung zwischen diesem Integral und der Leistungsgrenze hängt von der jeweiligen Anwendung ab. Eine Lösung besteht darin, eine lineare Beziehung zwischen dem Integral und der Leistungsgrenze anzunehmen.

Eine andere Möglichkeit besteht darin, die Leistungsgrenze auf die maximale Spitzenleistung zu setzen, wenn I = 0 ist, und die Leistungsgrenze auf die maximale Dauerleistung zu setzen, wenn I = 1 ist.

Die Erfindung betrifft ferner ein unterstützendes elektrisches Ladesystem für eine Brennkraftmaschine, welches zur Ausführung eines Verfahrens der vorstehend erläuterten Art ausgebildet ist. Das Ladesystem weist hierzu insbesondere eine Steuerungseinheit auf, welche über Eingänge für Signale über den angeforderten Kraftstofffluß, die Motordrehzahl und den aktuellen Ladedruck verfügt. Ferner sollte die Steuereinheit einen Speicher aufweisen, in welchem Kennfelder mit funktionalen Zusammenhängen zwischen einem Kraftstofffluß-Grenzwert, der Motordrehzahl und dem Ladedruck beziehungsweise einem Ziel-Ladedruck, der Motordrehzahl und dem angeforderten Kraftstofffluß abgelegt werden können. Weiterhin kann das Ladesystem als ein an der Welle des Abgasturboladers angreifender Elektromotor oder alternativ als ein in Reihe mit einem Abgasturbolader geschalteter, elektrisch betriebener Kompressor (EDC) ausgebildet sein.

Die Erfindung wird nachfolgend anhand der Figuren beispielhaft näher erläutert. Es zeigen:

Fig. 1      eine Brennkraftmaschine mit einem elektrisch unterstützten Turbolader;

Fig. 2      eine Brennkraftmaschine mit einem elektrisch betriebenen Kompressor stromabwärts eines Turboladers;

Fig. 3      eine Brennkraftmaschine mit einem elektrisch betriebenen Kompressor stromaufwärts eines Turboladers;

Fig. 4      ein Regelungsdiagramm für die Regelung der Leistung eines unterstützenden elektrischen Ladesystems und einer Bypass-Klappe.

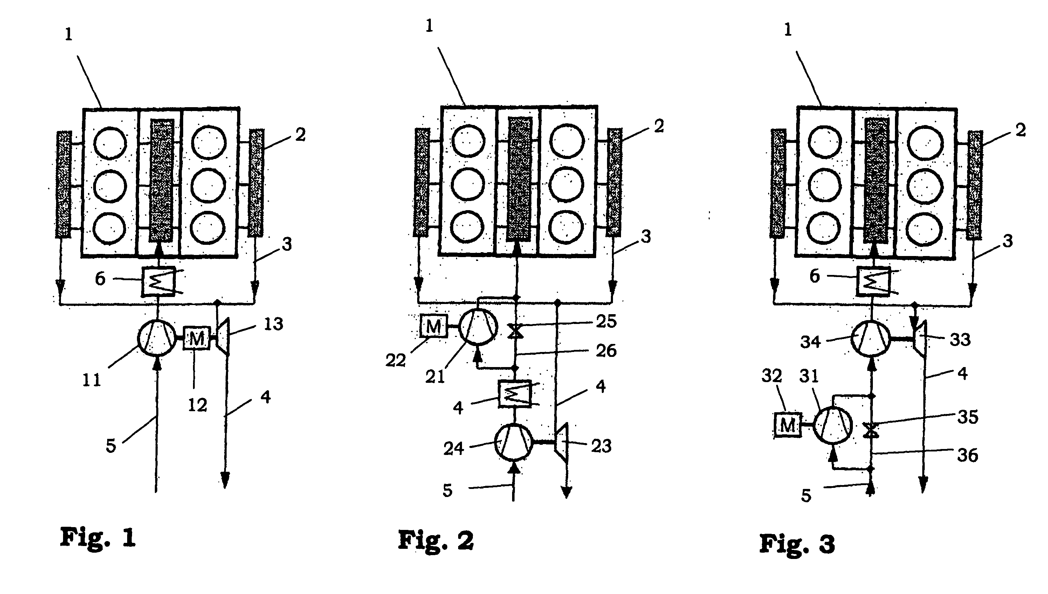

Figur 1 zeigt schematisch eine Brennkraftmaschine 1 mit sechs Zylindern, die von der Ansprüche nicht umfasst ist, bei der es sich insbesondere um einen Dieselmotor handeln kann. Zur Erhöhung der Leistung einer solchen Brennkraftmaschine ist es bekannt, einen Abgasturbolader vorzusehen. Dabei ist im Abgasweg der Brennkraftmaschine, der durch den Abgaskrümmer 2 sowie die Abgasleitungen 3 und 4 gebildet wird, eine Turbine 13 angeordnet, welche von dem Abgasstrom in Drehung versetzt wird. Diese Drehung überträgt die Turbine über eine Welle auf einen Verdichter 11, der in der Ansaugleitung 5 der Brennkraftmaschine angeordnet ist. Der Brennkraftmaschine 1 wird hierdurch verdichtete Ladeluft zugeführt, welche vor dem Eintritt in die Brennkraftmaschine über einen Zwischenkühler 6 geführt werden kann.

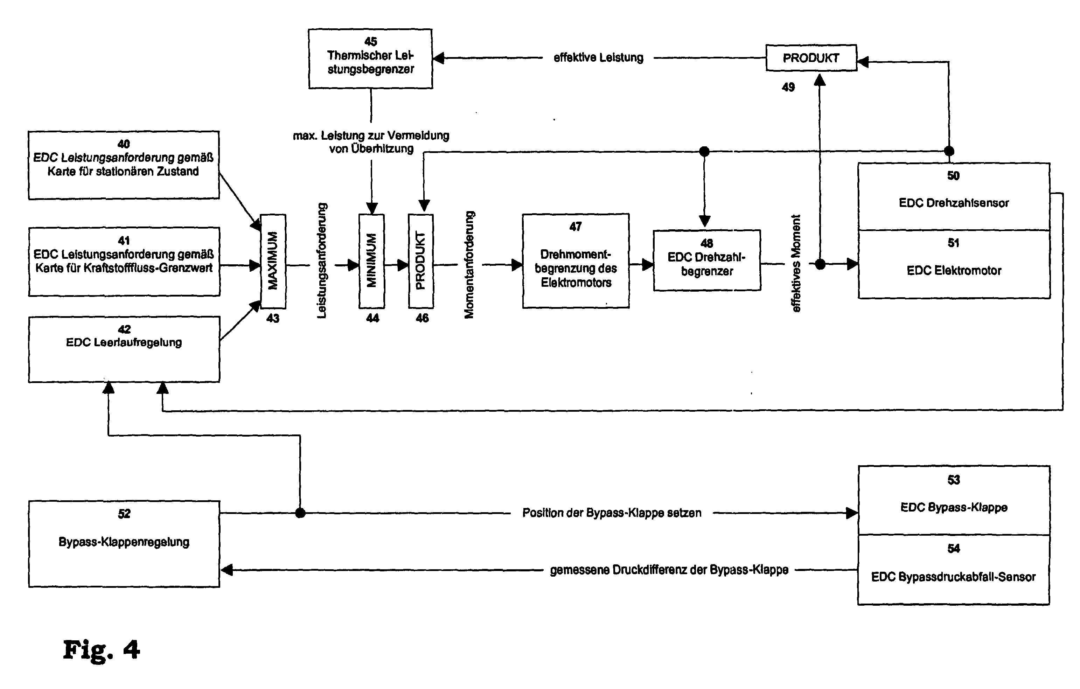

Um ein möglichst schnelles Reagieren der Brennkraftmaschine 1 auf eine erhöhte Leistungsanforderung gewährleisten zu können, wird ein unterstützendes elektrisches Ladesystem vorgesehen. Dies ist bei dem elektrisch unterstützten Turboabgaslader (EAT) nach Figur 1 durch einen Elektromotor 12 verwirklicht, welcher an der Welle des Abgasturboladers angeordnet ist und bei Stromzufuhr ein zusätzliches Drehmoment auf diese ausüben kann. Um für den Dieselmotor ein ähnlich schnelles Reaktionsverhalten wie bei einem Benzinmotor zu erzielen, sollte der Unterstützungselektromotor 12 so oft wie möglich laufen und damit den Verdichter 11 antreiben. Andererseits würde jedoch ein entsprechend häufiges Einschalten des Motors 12 die Lebensdauer der Batterie sowie die Kraftstoffausnutzung herabsetzen. Daher kommt es darauf an, das unterstützende elektrische Ladesystem 12 in Hinblick auf einen guten Kompromiß zwischen dem Reaktionsverhalten und dem Energieverbrauch zu regeln. Ein derartiger Kompromiß wird durch das vorstehend erläuterte bzw. in Figur 4 dargestellte Verfahren verwirklicht.

In Figur 2 ist eine Variante eines unterstützenden elektrischen Ladesystems dargestellt, wobei nur die zu Figur 1 unterschiedlichen Elemente und Anordnungen erläutert werden sollen. Bei dieser Variante ist ein Abgasturbolader mit einer Turbine 23 und einem Verdichter 24 in herkömmlicher Weise zwischen Abgasleitung und Ansaugleitung angeordnet. Zusätzlich hierzu ist stromabwärts des Verdichters 24 in der Ansaugleitung ein zweiter Verdichter 21 angeordnet, welcher von einem Elektromotor 22 angetrieben werden kann (EDC). Weiterhin ist eine Bypass-Leitung 26 vorgesehen, die der Umgehung des zweiten Verdichters 21 dient und die durch eine Bypass-Klappe 25 wahlweise geöffnet und geschlossen werden kann.

In Figur 3 ist ein ähnliches System mit einem elektrisch angetriebenen Kompressor EDC dargestellt, wobei im Unterschied zu Figur 2 der Kompressor 31, der Elektromotor 32 sowie die Bypass-Leitung 36 mit der zugehörigen Bypass-Klappe 35 stromaufwärts vor dem Verdichter 34 des Abgasturboladers 33, 34 angeordnet ist.

In Figur 4 sind schematisch verschiedene Aspekte einer intelligenten Regelung eines unterstützenden elektrischen Ladesystems sowie einer Bypass-Klappe (25 beziehungsweise 35 in den Figuren 2 und 3) dargestellt, wobei ergänzend auf die in der allgemeinen Beschreibung enthaltenen Erläuterungen Bezug genommen wird. Das Blockdiagramm von Figur 4 zeigt die verschiedenen Einflüsse, die bei einer Regelung des EDC Elektromotors (Block 51) beziehungsweise einer EDC Bypass-Klappe (Block 53) wirken.

Dabei wird in Block 43 zunächst ein Maximum aus drei ermittelten Werten für die dem EDC zuzuführende Leistung ausgewählt. Der erste dieser Werte wird dabei im Block 40 aus einer Karte bestimmt, welche die zuzuführende Leistung in Abhängigkeit von der Motordrehzahl und dem angeforderten Kraftstofffluß beschreibt und für den stationären Fall gilt. Der zweite Wert wird in Block 41 auf der Basis einer anderen Karte bestimmt, welche einen Kraftstofffluß-Grenzwert in Abhängigkeit von der Motordrehzahl und dem Ladedruck enthält. Sobald der angeforderte Kraftstofffluß den genannten Kraftstofffluß-Grenzwert überschreitet, wird in Block 41 ein hoher beziehungsweise maximaler Wert für die Leistungszufuhr zum EDC festgelegt. Im dritten Block 42 wird schließlich eine Regelung der EDC Leerlauf-Leistung vorgenommen, wobei insbesondere eine minimale EDC Drehzahl beziehungsweise ein minimaler EDC-Druckabfall eingeregelt werden können. Ferner kann darauf geachtet werden, daß die Drehzahl des EDC nicht einen maximal zulässigen Wert überschreitet. Für die Drehzahlkontrolle erhält Block 42 einen Meßwert der aktuellen EDC Drehzahl von einem entsprechenden Sensor 50. Zur Regelung des Druckabfalls kann Block 42 ferner eine Eingabe von einem EDC-Druckabfallsensor 54 erhalten.

Nachdem in Block 43 der maximale Leistungswert aus den Blöcken 40, 41 und 42 bestimmt wurde, wird im anschließenden Block 44 das Minimum zwischen diesem Wert und einem in Block 45 bestimmten thermischen Grenzwert ausgewählt. Block 45 sorgt dafür, daß keine Überhitzung des Systems aufgrund einer zu hohen Leistungszufuhr stattfindet. Um diese Aufgabe erfüllen zu können, erhält Block 45 aus Block 49 den Wert der aktuellen effektiven Leistung, die sich als Produkt aus dem effektiven Drehmoment des EDC sowie der EDC-Drehzahl (Block 50) ergibt.

Weiterhin wird in Block 46 der Quotient aus dem Minimalwert von Block 44 und der EDC-Drehzahl (Block 50) gebildet, um das gewünschte EDC-Drehmoment zu erhalten. Dieses wird dann in Block 47 einer Drehmomentbegrenzung des Elektromotors unterworfen. Im anschließenden Block 48 wird die resultierende EDC-Drehzahl begrenzt. Das effektive Drehmoment wird dann dem Elektromotor 51 des EDC zugeführt beziehungsweise von diesem erzeugt.

Parallel zur beschriebenen Regelung des EDC findet eine Regelung der Bypass-Klappe in der EDC Bypass-Leitung statt. Diese wird im dargestellten Fall von einer Bypass-Klappenregelung 52 auf der Basis des im Block 54 gemessenen Druckabfalls über die Bypass-Klappe vorgenommen. Dabei wird die Bypass-Klappe so reguliert, daß eine vorgegebene maximale Druckdifferenz am EDC beziehungsweise am Bypass nicht überschritten wird. Typischerweise kann diese Druckdifferenz etwa 5 mbar betragen.

## Patentansprüche

1. Verfahren zur Regelung eines Ladesystems (21, 22, 31, 32) für eine Brennkraftmaschine (1) daß einen Abgasturbolader und einen elektrisch betriebenen Kompressor umfaßt, wobei

   a) das Ladesystem mit hoher Leistung betrieben wird, wenn der angeforderte Kraftstofffluß einen von der Motordrehzahl und dem Ladedruck abhängigen Kraftstofftluß-Grenzwert überschreitet;

   b) das Ladesystem auf einen Leerlaufbetrieb zurückgestellt wird, wenn ein von der Motordrehzahl und dem angeforderten Kraftstofffluß abhängiger Ziel-Ladedruck erreicht ist;

   c) die Leistungszufuhr zum Ladesystem (31, 32, 21, 22) reduziert oder unterbrochen wird, wenn die Drehzahl des Ladesystems einen Maximalwert überschreitet.

2. Verfahren nach Anspruch 1,
   **dadurch gekennzeichnet, daß**
   Änderungen in der Leistungszufuhr zum Ladesystem (31, 32, 21, 22) rampenförmig erfolgen.

3. Verfahren nach Anspruch 2,
   **dadurch gekennzeichnet, daß**
   die Dauer einer rampenförmigen Änderung ca. 1 bis 3 s beträgt.

4. Verfahren nach einem der Ansprüche 1 bis 2,
   **dadurch gekennzeichnet, daß**
   die Leistungszufuhr zum Ladesystem (31, 32, 21, 22) reduziert oder unterbrochen wird, wenn die Versorgungsspannung des Ladesystems während des Betriebs einen Minimal wert unterschreitet und/oder wenn an der Brennkraftmaschine eine Abgasrückführung durchgeführt wird.

5. Verfahren nach Anspruch 5,
   **dadurch gekennzeichnet, daß**
   der elektrisch betriebene Kompressor (21, 22, 31, 32) im Leerlaufbetrieb so betrieben wird, dass wenn möglich

   a) die zugeführte Leistung oberhalb eines Minimalwertes bleibt, und/oder

   b) seine Drehzahl konstant bleibt, und/oder

   c) der Druckabfall über ihn auf einem vorgegebenen Druckabfallwert bleibt, und/oder

   d) die zugeführte Leistung einen von der Motordrehzahl und dem angeforderten Kraftstofffluß abhängigen Wert hat.

6. Verfahren nach Anspruch 5 oder 6,
   **dadurch gekennzeichnet, daß**
   eine Bypass-Leitung (26, 36) zur Umgehung des elektrisch betriebenen Kompressors (21, 22, 31, 32) vorhanden ist, welche von einer Bypass-Klappe (25, 35) wahlweise geöffnet oder verschlossen werden kann.

7. Verfahren nach Anspruch 7,
   **dadurch gekennzeichnet, daß**
   das Öffnen der Bypass-Klappe (25, 35) derart geregelt wird, dass ein vorgegebener Druckabfall über den elektrisch betriebenen Kompressor aufrecht erhalten wird.

8. Verfahren nach Anspruch 6 und einem der Ansprüche 7 oder 8,
   **dadurch gekennzeichnet, daß**
   der für den Leerlaufbetrieb des elektrisch betriebenen Kompressors (21, 31) vorgegebene Druckabfallwert auf Null gesetzt wird, wenn die Bypass-Klappe (25, 35) nicht geschlossen ist.

9. Unterstützendes elektrisches Ladesystem (21, 22, 31, 32) für eine Brennkraftmaschine (1),
   **dadurch gekennzeichnet, daß**
   dieses zur Ausführung eines Verfahrens nach einem der Ansprüche 1 bis 9 ausgebildet ist.

## Claims

1. Method for controlling a boosting device (21, 22, 31, 32) for an internal combustion engine (1) which comprises an exhaust gas turbocharger and an electrically operated compressor, wherein

   a) the boosting device is operated at high power if the requested fuel flow exceeds a fuel flow limiting value which is dependent on the engine speed and the boosting pressure;

   b) the boosting device is reset to an idling mode if a target boosting pressure which is dependent on the engine speed and the requested fuel flow is reached;

   c) the power supply to the boosting device (31, 32, 21, 22) is reduced or interrupted if the rotational speed of the boosting device exceeds a maximum value.

2. Method according to Claim 1, **characterized in that** changes in the power supply to the boosting device (31, 32, 21, 22) take place with a ramp shape.

3. Method according to Claim 2, **characterized in that** the duration of a ramp-shape change is approximately 1 to 3s.

4. Method according to Claim 1 or 2, **characterized in that** the power supply to the boosting device (31, 32, 21, 22) is reduced or interrupted if the supply voltage of the boosting device drops below a minimum value during operation and/or if exhaust gas is fed back to the internal combustion engine.

5. Method according to Claim 5, **characterized in that** the electrically operated compressor (21, 22, 31, 32) is operated in idling mode in such a way that if possible

    a) the supplied power remains above a minimum value, and/or

    b) its rotational speed remains constant, and/or

    c) the drop in pressure across it remains at a predefined pressure drop value, and/or

    d) the supplied power has a value which is dependent on the engine speed and the requested fuel flow.

6. Method according to Claim 5 or 6, **characterized in that** a bypass line (26, 36) for bypassing the electrically operated compressor (21, 22, 31, 32) is present, which bypass line (26, 36) can be optionally opened or closed by a bypass valve (25, 35).

7. Method according to Claim 7, **characterized in that** the opening of the bypass valve (25, 35) is controlled in such a way that a predefined pressure drop across the electrically operated compressor is maintained.

8. Method according to Claim 6 and one of Claims 7 or 8, **characterized in that** the pressure drop value predefined for the idling mode of the electrically operated compressor (21, 31) is set to zero if the bypass valve (25, 35) is not closed.

9. Electric assisted boosting device (21, 22, 31, 32) for an internal combustion engine (1), **characterized in that** said device (21, 22, 31, 32) is designed to carry out a method according to one of Claims 1 to 9.

**Revendications**

1. Procédé pour la régulation d'un système de charge (21, 22, 31, 32) pour un moteur à combustion interne (1) comprenant une turbosoufflante à gaz d'échappement et un compresseur électrique, dans lequel :

    a) le système de charge est entraîné à haute puissance, lorsque le flux de carburant demandé dépasse une valeur limite de flux de carburant dépendant du régime du moteur et de la pression de charge ;

    b) le système de charge est ramené à un mode de fonctionnement en marche à vide lorsqu'une pression de charge cible dépendant du régime du moteur et du flux de carburant demandé est atteinte ;

    c) l'apport en puissance au système de charge (31, 32, 21, 22) est réduit ou interrompu lorsque le régime du système de charge dépasse une valeur maximale.

2. Procédé selon la revendication 1, **caractérisé en ce que** des variations dans l'apport en puissance au système de charge (31, 32, 21, 22) ont lieu en forme de rampe.

3. Procédé selon la revendication 2, **caractérisé en ce que** la durée d'une variation en forme de rampe est d'environ 1 à 3 s.

4. Procédé selon l'une quelconque des revendications 1 à 2, **caractérisé en ce que** l'apport en puissance au système de charge (31, 32, 21, 22) est réduit ou interrompu lorsque la tension d'alimentation du système de charge pendant le fonctionnement devient inférieure à une valeur minimale et/ou lorsqu'une recirculation de gaz d'échappement a lieu au niveau du moteur à combustion interne.

5. Procédé selon la revendication 5, **caractérisé en ce que** le compresseur électrique (21, 22, 31, 32) est entraîné en mode de marche à vide de telle sorte que lorsque cela est possible

    a) la puissance apportée reste au-dessus d'une valeur minimale et/ou

    b) son régime reste constant et/ou

c) la chute de pression au niveau de celui-ci reste à une valeur de chute de pression prédéfinie et/ou

d) la puissance apportée a une valeur dépendant du régime du moteur et du flux de carburant demandé.

6. Procédé selon la revendication 5 ou 6, **caractérisé en ce qu'**il est prévu une conduite de dérivation (26, 36) pour contourner le compresseur électrique (21, 22, 31, 32), laquelle peut être ouverte ou fermée de manière sélective par un clapet de dérivation (25, 35).

7. Procédé selon la revendication 7, **caractérisé en ce que** l'ouverture du clapet de dérivation (25, 35) est régulée de telle sorte qu'une chute de pression prédéfinie au niveau du compresseur électrique soit maintenue.

8. Procédé selon la revendication 6 et l'une quelconque des revendication 7 ou 8, **caractérisé en ce que** la valeur de la chute de pression prédéfinie pour le mode de fonctionnement en marche à vide du compresseur électrique (21, 31) est fixée à zéro lorsque le clapet de dérivation (25, 35) n'est pas fermé.

9. Système de charge avec assistance électrique (21, 22, 31, 32) pour un moteur à combustion interne (1), **caractérisé en ce que** celui-ci est réalisé pour la mise en oeuvre d'un procédé selon l'une quelconque des revendications 1 à 8.

Fig. 3

Fig. 2

Fig. 1

EP 1 347 158 B1

```
                                          ┌─────────────────────┐
                                          │         45          │        effektive Leistung        ┌──────────┐
                                          │  Thermischer Lei-   │◄─────────────────────────────────│ PRODUKT  │◄───────┐
                                          │   stungsbegrenzer   │                                  └──────────┘        │
                                          └─────────────────────┘                                      49             │
                                                     │                                                                │
  ┌─────────────────────────┐          max. Leistung zur Vermeidung                                                   │
  │           40            │                 von Überhitzung                                                         │
  │ EDC Leistungsanforderung│                       │                                                                 │
  │ gemäß Karte für         │───┐                    │                                                                 │
  │ stationären Zustand     │   │                    │                         ┌──────────────┐                       │
  └─────────────────────────┘   ▼                    ▼                         │      50      │                       │
                           ┌───────┐         ┌───────┐ ┌───────┐               │ EDC          │                       │
  ┌─────────────────────────┐│MAXIMUM│  Leist-│MINIMUM│ │PRODUKT│  ┌──────────┐│ Drehzahlsensor│                      │
  │           41            ││       │  ungs- │       │ │       │  │    47    │├──────────────┤                       │
  │ EDC Leistungsanforderung││       │  anfor-│       │ │       │  │Drehmoment││      51      │                       │
  │ gemäß Karte für         │──►     │  derung│       │►│       │►─│-begrenzung│ EDC          │                       │
  │ Kraftstofffluss-Grenzwert││      │        │       │ │       │  │des       ││ Elektromotor │                       │
  └─────────────────────────┘│      │        │       │ │       │  │Elektro-  │└──────────────┘                       │
                           │       │        │       │ │       │  │motors    │                                       │
  ┌─────────────────────────┐│      │        └───────┘ └───────┘  └──────────┘                                       │
  │           42            ││      │           44      46                                                            │
  │   EDC Leerlaufregelung  │──►    │                                                                                 │
  └─────────────────────────┘└───────┘                                                                                │
                              43                                                                                      │
```

45
Thermischer Leistungsbegrenzer

effektive Leistung

PRODUKT
49

40
EDC Leistungsanforderung gemäß Karte für stationären Zustand

max. Leistung zur Vermeidung von Überhitzung

41
EDC Leistungsanforderung gemäß Karte für Kraftstofffluss-Grenzwert

42
EDC Leerlaufregelung

MAXIMUM
43

Leistungsanforderung

MINIMUM
44

PRODUKT
46

Momentanforderung

47
Drehmomentbegrenzung des Elektromotors

48
EDC Drehzahlbegrenzer

effektives Moment

50
EDC Drehzahlsensor

51
EDC Elektromotor

52
Bypass-Klappenregelung

Position der Bypass-Klappe setzen

53
EDC Bypass-Klappe

gemessene Druckdifferenz der Bypass-Klappe

54
EDC Bypassdruckabfall-Sensor

# Fig. 4